# EUROPEAN PATENT APPLICATION

(11) **EP 4 672 450 A1**
(43) Date of publication of application: **31.12.2025**
(21) Application number: 25163835.9
(22) Date of filing: 14.03.2025
(51) Int. Cl.: H01M 50/176, H01M 50/557, H01M 50/566, H01M 50/528, H01M 50/15, H01M 50/103, H01M 50/188

(54) **CAP ASSEMBLY AND SECONDARY BATTERY INCLUDING THE SAME**

(30) Priority: 27.06.2024 KR 20240084709
(71) Applicant: SAMSUNG SDI CO., LTD., Yongin-si, Gyeonggi-do 17084 (KR)
(72) Inventor: BAE, Kwangsoo, 17084 Yongin-Si, Gyeonggi-do (KR)
(74) Representative: Gulde & Partner

(57) **Abstract**

A secondary battery is provided. The secondary battery includes an electrode assembly (100), a sub-plate assembly (310, 410) comprising a sub-plate (320, 420) connected to the electrode assembly 100) and a current collector (330, 430) coupled to the sub-plate (320, 420), and a terminal plate (380, 480) coupled to the current collector (330, 430). The terminal plate (380, 480) defines a recess(382, 482) (382, 482) in a top surface of the terminal plate (380, 480). The recess (382, 482) includes a first tapered part (384, 484) having a first inclination angle (384_A, 484_A) with respect to a direction parallel to the terminal plate (380, 480), and a second tapered part (386, 486) having a second inclination angle (386_A, 486_A) with respect to the direction parallel to the terminal plate (380, 480). The first inclination angle (384_A, 484_A) and the second inclination angle (386_A, 486_A) are different from each other.

## Description

### BACKGROUND

### 1. Field

Embodiments of the present disclosure relate to a cap assembly and a secondary battery including the same.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (*e.g*., home and/or utility scale power storage). A secondary battery generally includes an electrode assembly composed of a positive electrode and a negative electrode, a case accommodating the same, and electrode terminals connected to the electrode assembly.

Secondary batteries may be classified into cylindrical secondary batteries, prismatic type (kind) secondary batteries, and pouch type (kind) secondary batteries, depending on the shape of the case. Such a prismatic type (kind) secondary battery may have a structure in which an electrode assembly is built (or installed) in a prismatic metal can. The electrode assembly may be inserted into the prismatic metal can, and a cap plate may be welded to seal the can. For sealing the can, improvement of welding quality may be an important factor in improving durability of the secondary battery.

The above information disclosed in this Background section is for enhancement of understanding of the background of the present disclosure, and therefore, it may contain information that does not constitute related (or prior) art.

### SUMMARY

The invention is defined by the appended claims. The description that follows is subjected to this limitation. Any disclosure lying outside the scope of said claims is only intended for illustrative as well as comparative purposes.

Aspects of one or more embodiments of the present disclosure relate to a cap assembly and a secondary battery including the same to improve durability.

These and other aspects and features of the present disclosure will be described in or will be apparent from the following description of embodiments of the present disclosure.

A secondary battery according to one or more embodiments of the present disclosure includes an electrode assembly, a sub-plate assembly including a sub-plate connected to the electrode assembly and a current collector coupled to the sub-plate, and a terminal plate coupled to the current collector, wherein the terminal plate defines a recess in a top surface of the terminal plate. The recess includes (*e.g*., is defined by) a first tapered part having a first inclination angle with respect to a direction parallel to the terminal plate, and a second tapered part having a second inclination angle with respect to the direction parallel to the terminal plate, and the first inclination angle and the second inclination angle are different from each other.

According to one or more embodiments, the recess may have a shape in which the top surface of the first terminal plate is concavely recessed by the first tapered part and the second tapered part.

According to one or more embodiments, the first tapered part may be arranged above the second tapered part. In other words, the first tapered part may be arranged above the second tapered part in relation to a direction away from the secondary battery or from the top surface of the terminal plate or, in other words, in a direction away from the terminal. In other words, the second tapered part may be arranged between the first tapered part and the current collector.

Within this disclosure, 'upward' may refer to a direction extending away from the secondary battery's mounting surface in its intended operational configuration.

According to one or more embodiments, the first inclination angle may be greater than the second inclination angle.

According to one or more embodiments, the first inclination angle may be at least 20%, at least 30% or at least 40% greater than the second inclination angle.

According to one or more embodiments, the first inclination angle may be smaller than the second inclination angle.

According to one or more embodiments, the first inclination angle may be at least 20%, at least 30% or at least 40% smaller than the second inclination angle.

According to one or more embodiments, with respect to a direction perpendicular to the terminal plate, a height of the first tapered part may differ from a height of the second tapered part by less than 25%, less than 20%, or less than 5%.

According to one or more embodiments, with respect to a direction perpendicular to the terminal plate, a height of the first tapered part may be equal to a height of the second tapered part.

According to one or more embodiments, the current collector may include a flat surface coupled to the sub-plate and a protrusion protruding from the flat surface, and the protrusion and the terminal plate may be in contact with each other. In other words, the protrusion may contact the terminal plate. The protrusion may have a cylindrical shape. According to one or more embodiments, the recess may be defined in a portion of the top surface of the terminal plate, which overlaps the protrusion in a first direction X.

According to one or more embodiments, the terminal plate and the protrusion may be welded (*e.g*., may be coupled) to each other, and a top surface of the terminal plate at the recess may include a welding area welded to the protrusion. In other words, the secondary battery may include a welding joint between the terminal plate and the protrusion. In other words, the terminal plate and the protrusion may include a material connection that is formed by a weld seam or welding joint between them. The welding area is the area of the top surface that forms the welded joint with the protrusion.

According to one or more embodiments, the terminal plate may include (*e.g*., may define) a hole, and the hole may expose a portion of the top surface of the protrusion. In other words, the hole may extend along the terminal plate in the direction away from the secondary battery or from the top surface of the terminal plate or, in other words, in a direction away from the terminal, or, in other words, in the direction extending away from the secondary battery's mounting surface in its intended operational configuration. In other words, the portion of the top surface that overlaps or is congruent with the hole may be exposed and therefore may not be covered by the terminal plate. The hole may be arranged within the recess.

According to one or more embodiments, the welding area may be arranged around the hole. In other words, the welding area may surround the hole. It may be ring-shaped or have other shapes.

According to one or more embodiments, a thickness of a central portion of the terminal plate including the recess may be less than a thickness of another portion not including the recess.

According to one or more embodiments, a maximum depth of the recess may be about 60% or more of a thickness of the terminal plate on (at) an area other than the recess. In other words, the terminal plate may have a width in areas that do not include the recess that is greater than a width of the terminal plate in the area of the recess. The thickness of its non-recess area may be the reference to which the depth of the recess refers and thus defines the 100%. The recess may have a maximum depth of more than 70% or more than 80%. In other words, a thickness of the terminal plate in the area of the recess may be 40% or less, or 30% or less, or 20% or less.

According to one or more embodiments, the terminal plate may include an upper terminal plate and a lower terminal plate.

According to one or more embodiments, the terminal plate may include an upper terminal plate and a lower terminal plate, and the upper terminal plate and the lower terminal plate may be made of different materials. The upper terminal plate and the lower terminal plate may be stacked on top of each other along the direction away from the secondary battery or from the top surface of the terminal plate or, in other words, in the direction away from the terminal, or, in other words, in the direction extending away from the secondary battery's mounting surface in its intended operational configuration. The lower terminal plate may be located between the upper terminal plate and the current collector. In other words, the upper terminal plate may include or consist of a material that is different from a material that the lower terminal plate includes or consists of.

According to one or more embodiments, the upper terminal plate may include the recess.

According to one or more embodiments, the secondary battery may further include a case in which the electrode assembly is accommodated and which includes (*e.g*., defines) a first opening (*e.g.,* an opened first surface) and a second opening (*e.g.,* an opened second surface) facing (*e.g.,* opposite to) the first opening, a first cap plate configured to cover (*e.g.,* covering) the first opening, and a second cap plate configured to cover (*e.g*., covering) the second opening, the first cap plate may include (*e.g*., define) a through-hole, the current collector may include a flat surface coupled to the sub-plate and a protrusion protruding from the flat surface, and the protrusion may be inserted into the through-hole. In other words, the protrusion may be configured to be inserted into the through-hole. In other words, the protrusion may be arranged inside the through-hole. The first opening and the second opening may be defined on both (*e.g*., opposite) sides of the case. The opened second surface may face (*e.g*., be opposite to) the opened first surface. The opened second surface and the opened first surface may be spaced and/or apart (e.g., spaced apart or separated) from each other to face (e.g., to be opposite to) each other in a first direction X. Each of the opened first surface and the opened second surface may refer to an opening.

According to one or more embodiments, the second cap plate may include (*e.g*., define) a through-hole, the current collector may include a flat surface coupled to the sub-plate and a protrusion protruding from the flat surface, and the protrusion may be inserted into the through-hole.

According to one or more embodiments, the case may include a first long sidewall and a second long sidewall, which are spaced and/or apart (*e.g*., spaced apart or separated) from each other and face each other, and a first short sidewall and a second short sidewall, which are spaced and/or apart (*e.g*., spaced apart or separated) from each other and face each other and each of which has an area less than that of each of the first long sidewall and the second long sidewall. The first long sidewall and the second long sidewall may face (e.g., be opposite to) each other. The first long sidewall and the second long sidewall may be spaced and/or apart (e.g., spaced apart or separated) from each other to face (e.g., to be opposite to) each other in a second direction Y. The first short sidewall and the second short sidewall may face (e.g., be opposite to) each other. The first short sidewall and the second short sidewall may be spaced and/or apart (e.g., spaced apart or separated) from each other to face (e.g., to be opposite to) each other in the third direction Z. An area of each of the first and second short sidewalls may be less than an area of each of the first and second long sidewalls.

According to one or more embodiments, the secondary battery may further include a sealing member coupled to the first cap plate, and the terminal plate may be coupled to the sealing member.

According to one or more embodiments, the secondary battery may further include a sealing member coupled to the second cap plate, and the terminal plate may be coupled to the sealing member.

According to one or more embodiments, the secondary battery may further include a vent part in the first short sidewall or the second short sidewall.

According to one or more embodiments, the secondary battery may further include a rectangular case in which the electrode assembly is accommodated and which includes (*e.g*., defines) an opening at an upper portion of the rectangular case, a third cap plate configured to cover (*e.g*., covering) the opening, and a sealing member coupled to the third cap plate, the case may include a bottom part configured to face (*e.g*., facing) the opening, a third long sidewall and a fourth long sidewall, which are perpendicularly connected to the bottom part and spaced and/or apart (*e.g*., spaced apart or separated) from each other and facing each other, and a third short sidewall and a fourth short sidewall which are perpendicularly connected to the bottom part, are spaced and/or apart (*e.g*., spaced apart or separated) from each other and facing each other, and each of which has an area less than that of each of the third long sidewall and the fourth long sidewall, and the third cap plate may include a vent part.

A cap assembly according to one or more embodiments of the present disclosure includes a cap plate, a sealing member coupled to the cap plate, and a terminal plate coupled to the sealing member, wherein the terminal plate includes (*e.g*., define) a recess in a top surface of the terminal plate. The recess includes (*e.g*., is defined by) a first tapered part having a first inclination angle with respect to a direction parallel to the terminal plate, and a second tapered part having a second inclination angle with respect to the direction parallel to the terminal plate, and the first inclination angle and the second inclination angle be different from each other.

According to one or more embodiments, the first tapered part may be arranged above the second tapered part.

According to one or more embodiments, the first inclination angle may be greater than the second inclination angle.

According to one or more embodiments, with respect to a direction perpendicular to the terminal plate, a height of the first tapered part may be equal to a height of the second tapered part.

According to one or more embodiments, a maximum depth of the recess may be about 60% or more of a thickness of the terminal plate on (at) an area other than the recess.

According to one or more embodiments of the present disclosure, the secondary battery may include the first tapered part and the second tapered part having the different inclination angles in the first recess, and thus, the welding gas generated in a case where the welding process is performed may easily escape to the outside.

In such embodiments, in spraying air or another gas (*e.g*., to act as wind) to remove the welding gas generated during the welding process, the wind may be effectively circulated by the first tapered part and the second tapered part having the different inclination angles, and the welding gas may escape to the outside and not remain within the first recess. Therefore, defects of the secondary battery (*e.g*., defects caused by the welding gas, such as nitrogen gas) may be reduced, and the reliability of secondary battery may be improved.

However, aspects and features of the present disclosure are not limited to those described above, and other aspects and features not mentioned will be clearly understood by a person skilled in the art from the detailed description, described below.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings:
FIG. 1 illustrates a perspective view of a secondary battery according to one or more embodiments of the present disclosure.
FIG. 2 illustrates a cross-sectional view of the secondary battery of FIG. 1, according to one or more embodiments of the present disclosure.
FIG. 3 illustrates a perspective view of the case according to one or more embodiments of the present disclosure.
FIG. 4 illustrates an enlarged view of the region R1 of FIG. 2, according to one or more embodiments of the present disclosure.
FIG. 5A illustrates a view of a structure in which a first cap assembly and a first sub-plate assembly of FIG. 4 are separated from each other, according to one or more embodiments of the present disclosure.
FIG. 5B illustrates an enlarged view of the region R3 of FIG. 5A, according to one or more embodiments of the present disclosure.
FIG. 6 illustrates a view for describing a first welding area defined on a first terminal plate according to one or more embodiments of the present disclosure.
FIG. 7 illustrates an enlarged view of the region R2 of FIG. 2, according to one or more embodiments of the present disclosure.
FIG. 8A illustrates a view of a structure in which a second cap assembly and a second sub-plate assembly of FIG. 7 are separated from each other, according to one or more embodiments of the present disclosure.
FIG. 8B illustrates an enlarged view of the region R4 of FIG. 8A, according to one or more embodiments of the present disclosure.
FIG. 9 illustrates a view for describing a second welding area defined on a second terminal plate according to one or more embodiments of the present disclosure.
FIG. 10 illustrates a perspective view of a secondary battery according to one or more embodiments of the present disclosure.
FIG. 11 illustrates a cross-sectional view of the secondary battery of FIG. 10, according to one or more embodiments of the present disclosure.
FIG. 12 illustrates a perspective view of the case according to one or more embodiments of the present disclosure.

### DETAILED DESCRIPTION

Hereinafter, embodiments of the present disclosure will be described, in detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term to explain his/her invention in the best way.

The embodiments described in this specification and the configurations shown in the drawings are only some of the embodiments of the present disclosure and do not represent all of the technical ideas, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification .

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In this specification, singular expressions include plural expressions unless the context clearly specifies that they are singular. Additionally, plural expressions include singular expressions unless the context clearly specifies that they are plural. In the entire specification, when it is described that one includes (or has) some elements, it should be understood that it may include (or include or has) only those elements, or it may include (or include or have) other elements as well as those elements in a case where there is no specific limitation.

In addition, it will also be understood that when an element is referred to as being "between" two elements, it can be the only element between the two elements, or one or more intervening elements may also be present.

In the present disclosure, dimensions of layers and areas and relative sizes shown in the drawings may be exaggerated for clarity of description. For example, the dimensions shown in the drawings are only for convenience of understanding and the present disclosure is not limited thereto. Throughout the disclosure, like reference numerals refer to like elements throughout the present disclosure, and duplicative descriptions thereof may not be provided.

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

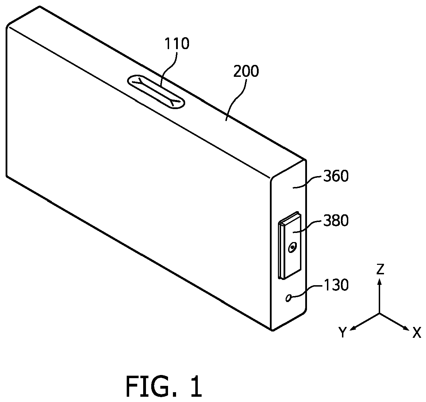

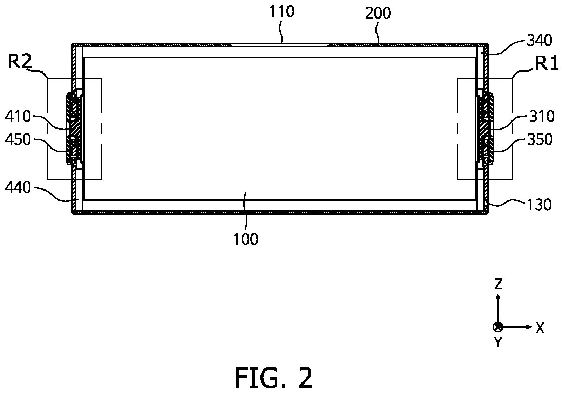

FIG. 1 illustrates a perspective view of a secondary battery according to one or more embodiments of the present disclosure. FIG. 2 illustrates a cross-sectional view of the secondary battery of FIG. 1, according to one or more embodiments of the present disclosure.

Referring to FIGS. 1 and 2, a secondary battery may include an electrode assembly 100, a case 200 that accommodates the electrode assembly 100, a first sub-plate assembly 310 and a second sub-plate assembly 410, which are connected to the electrode assembly 100, and a first cap assembly 350 and a second cap assembly 450, which are coupled to the case 200.

The electrode assembly 100 may be accommodated inside the case 200. An electrode assembly may be formed by winding or stacking a stack of a first electrode plate, a separator, and a second electrode plate, which are formed as thin plates or films. When the electrode assembly is a wound stack, a winding axis may be parallel to the longitudinal direction (*e.g*., the y direction) of the case. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (*e.g*., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (*e.g*., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (*e.g*., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (*e.g*., the opposite side) of the electrode assembly when the second electrode plate is manufactured, or the second electrode plate may protrude to the other side of the electrode assembly more than (*e.g*., farther than or beyond) the separator without being separately cut.

In some embodiments, the first electrode tab may be located on the left side of the electrode assembly, and the second electrode tab may be located on the right side of the electrode assembly. In other embodiments, the first electrode tab and the second electrode tab may be located on one side of the electrode assembly in the same direction. Here, for convenience of description, the left and right sides are defined according to the secondary battery as oriented in FIG. 1, and the positions thereof may change when the secondary battery is rotated left and right or up and down.

In one or more embodiments, an electrolyte injection hole 130 may be defined in a first cap plate 360. An electrolyte may be injected into the case 200 through the electrolyte injection hole 130. In FIG. 1, the electrolyte injection hole 130 is illustrated as being defined in the first cap plate 360, but the present disclosure is not limited thereto. After the injection of the electrolyte is completed, the electrolyte injection hole 130 may be sealed using a seal, such as a plug.

In one or more embodiments, a vent part 110 may be provided in one surface of the case 200. For example, the vent part 110 may be defined in a top side of the case 200, and may pass through the top surface of the case 200, as shown, for example, in FIGS. 1 and 2. However, the present disclosure is not limited thereto. For example, the vent part 110 may be defined in a bottom surface of the case 200. Herein, the bottom surface of the case 200 may refer to a surface facing (*e.g*., opposite to) a top side of the case 200 in the third direction Z. The vent part 110 may prevent or reduce explosion of the secondary battery or prevent or reduce a chain heating reaction of secondary batteries arranged close to the secondary battery.

In one or more embodiments, the vent 110 may be configured to be opened in a situation where an internal pressure of the secondary battery exceeds a set or predetermined critical pressure. In one or more embodiments, the critical pressure may be set differently depending on application fields, materials, purposes, and/or the like, of the secondary battery. In one or more embodiments, the vent part 110 may be configured to be opened in a situation where an internal temperature of the secondary battery exceeds a set or predetermined critical temperature. In one or more embodiments, the critical temperature may be set differently depending on the application fields, the materials, the purposes, and/or the like, of the secondary battery.

In FIG. 1, one vent part 110 is shown to be provided at a center of one surface of the case 200, but the present disclosure is not limited thereto. In one or more embodiments, the set or predetermined number of vent parts 110 may be provided at set or predetermined positions in one surface of the case 200. For example, two or more vent parts 110 may be provided in one surface of the case 200.

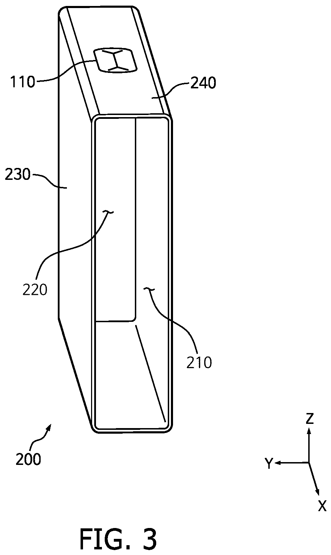

FIG. 3 illustrates a perspective view of the case according to one or more embodiments of the present disclosure. Referring to FIGS. 2 and 3, the case 200 may include long sidewalls 230 facing (*e.g.,* opposite to) each other, short sidewalls 240 facing (*e.g.,* opposite to) each other, an opened first surface 210 (*e.g*., a first opening 210), and an opened second surface 220 (*e.g*., a second opening 220).

A first direction X may refer to an X-axis direction. A second direction Y may be orthogonal to the first direction X. The second direction Y may refer to a Y-axis direction. A third direction Z may be orthogonal to each of the first direction X and the second direction Y. The third direction Z may refer to a Z-axis direction.

The long sidewalls 230 may include a first long sidewall and a second long sidewall. The first long sidewall and the second long sidewall may face (*e.g*., be opposite to) each other. The first long sidewall and the second long sidewall may be spaced and/or apart (*e.g*., spaced apart or separated) from each other to face (*e.g*., to be opposite to) each other in the second direction Y.

The short sidewalls 240 may include a first short sidewall and a second short sidewall. The first short sidewall and the second short sidewall may face (*e.g*., be opposite to) each other. The first short sidewall and the second short sidewall may be spaced and/or apart (*e.g*., spaced apart or separated) from each other to face (*e.g*., to be opposite to) each other in the third direction Z. An area of each of the first and second short sidewalls may be less than an area of each of the first and second long sidewalls.

The opened first surface 210 (*e.g*., the first opening 210) and the opened second surface 220 (*e.g.,* the second opening 220) may be defined on both (*e.g.,* opposite) sides of the case 200. The opened second surface 220 may face (*e.g*., be opposite to) the opened first surface 210. The opened second surface 220 and the opened first surface 210 may be spaced and/or apart (*e.g.,* spaced apart or separated) from each other to face (*e.g.,* to be opposite to) each other in the first direction X. Each of the opened first surface 210 and the opened second surface 220 may refer to an opening.

The case 200 may be made of a conductive metal such as aluminum, an aluminum alloy, nickel-plated steel, and/or the like.

The first cap plate 360 may cover the opened first surface 210 and may be coupled to the case 200. The second cap plate 460 may cover the opened second surface 220 and may be coupled to the case 200. For example, each of the first cap plate 360 and the second cap plate 460 may be welded to the case 200. The first cap plate 360 and the second cap plate 460 may seal the case 200.

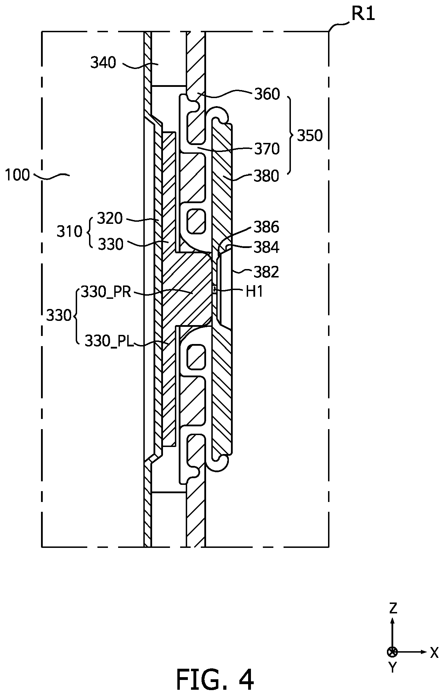

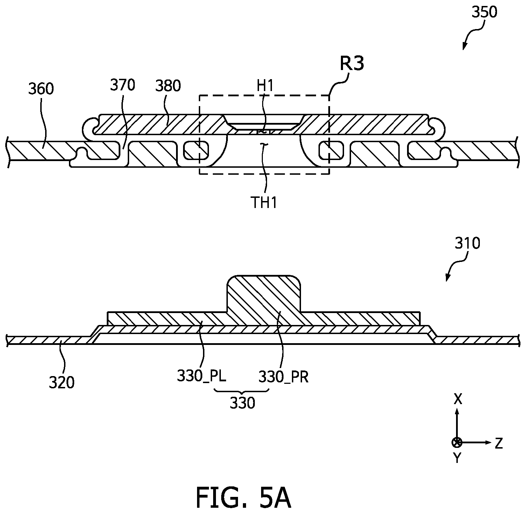

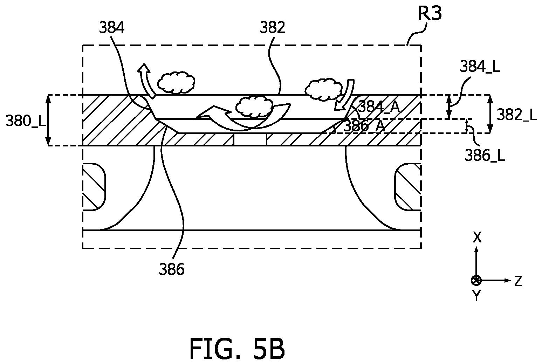

FIG. 4 illustrates an enlarged view of the region R1 of FIG. 2, according to one or more embodiments of the present disclosure. FIG. 5A illustrates a view of a structure in which a first cap assembly and a first sub-plate assembly of FIG. 4 are separated from each other, according to one or more embodiments of the present disclosure. FIG. 5B illustrates an enlarged view of the region R3 of FIG. 5A, according to one or more embodiments of the present disclosure.

Referring to FIG. 4, a first sub-plate assembly 310 and a first cap assembly 350 may be coupled to one side of the electrode assembly 100.

The first sub-plate assembly 310 may be coupled to one side of the electrode assembly 100 and may be electrically connected to the first electrode plate (*e.g*., a positive electrode plate) of the electrode assembly 100. The first sub-plate assembly 310 may include a first sub-plate 320 and a first current collector 330.

The first sub-plate 320 may be coupled to a first electrode tab of the electrode assembly 100. For example, the first electrode tab may be welded to the first sub-plate 320. The first sub-plate 320 may be in contact with the first electrode tab and electrically connected to the first electrode plate.

The first current collector 330 may be coupled to the first sub-plate 320. For example, the first current collector 330 and the first sub-plate 320 may be welded together in order to be coupled to each other. The first current collector 330 may be electrically connected to the first sub-plate 320.

A first insulating member 340 may be arranged between the first sub-plate assembly 310 and the first cap assembly 350. The first insulating member 340 may prevent or reduce contact between the first sub-plate 320 and the first cap plate 360.

Referring to FIG. 5A, the first current collector 330 may include a first flat surface 330_PL and a first protrusion 330_PR. The first flat surface 330_PL may be welded and coupled to the first sub-plate 320. The first protrusion 330_PR may protrude from the first flat surface 330_PL. The first protrusion 330_PR may be provided in a cylindrical shape.

The first cap assembly 350 may include a first cap plate 360, a first sealing member 370, and a first terminal plate 380.

The first cap plate 360 may include a first through-hole TH1. The first sealing member 370 may be coupled to the first cap plate 360. The first sealing member 370 may seal a gap between the first terminal plate 380 and the first cap plate 360. The first sealing member 370 may include an insulating material. The first cap plate 360 and the first terminal plate 380 may be insulated from each other by the first sealing member 370.

The first terminal plate 380 may be coupled to the first sealing member 370. The first terminal plate 380 may be a positive electrode terminal of the secondary battery. For example, a busbar may be welded to the first terminal plate 380 and thus be electrically connected to another secondary battery.

A first recess 382 may be defined in a top surface of the first terminal plate 380. For example, the first recess 382 may be defined in a portion of the top surface of the first terminal plate 380, which overlaps the first protrusion 330_PR in the first direction X. A thickness of a central portion of the first terminal plate 380 may be less than a thickness of the other portion due to the first recess 382.

The first recess 382 may include a first tapered part 384 having a first inclination angle 384_A with respect to the third direction Z and a second tapered part 386 having a second inclination angle 386_A with respect to the third direction Z. The first tapered part 384 may be arranged above the second tapered part 386. In one or more embodiments, the first inclination angle 384_A and the second inclination angle 386_A may be different from each other. In one or more embodiments, the first inclination angle 384_A may be greater than the second inclination angle 386_A with respect to the third direction Z. The first recess 382 may have a shape in which the top surface of the first terminal plate 380 is concavely recessed by the first tapered part 384 and the second tapered part 386.

In one or more embodiments, a height 384_L of the first tapered part 384 may be equal to a height 386_L of the second tapered part 386.

In one or more embodiments, a maximum depth 382_L of the first recess 382 may be about 60% or more relative to a thickness 380_L of the first terminal plate 380 in (at) an area other than the first recess 382. In one or more embodiments, the maximum depth 382_L of the first recess 382 may be a depth of a portion of the first recess 382, at which the first tapered part 384 and the second tapered part 386 are not provided. In other words, the maximum depth 382_L of the first recess 382 may be substantially equal to the height 384_L of the first tapered part 384 plus the height 386_L of the second tapered part 386.

In one or more embodiments, the first terminal plate 380 may include a first hole H1. The first hole H1 may be arranged within the first recess 382 of the first terminal plate 380. The first hole H1 may expose a portion of the top surface of the first protrusion 330_PR. In embodiments in which a portion of the top surface of the first protrusion 330_PR is exposed by the first hole H1, it is possible to check whether the first terminal plate 380 and the first protrusion 330_PR are in contact with each other through the first hole H1. However, the present disclosure is not limited thereto. For example, the first terminal plate 380 may completely cover the top surface of the first protrusion 330_PR without defining the first hole H1.

Hereinafter, the coupling of the first sub-plate assembly 310 and the first cap assembly 350 will be described. In embodiments in which the first sub-plate assembly 310 and the first cap assembly 350 are coupled to each other, the top surface of the first protrusion 330_PR may be in contact with the first terminal plate 380. For example, the first protrusion 330_PR may pass through the first through-hole TH1 of the first cap plate 360 and be in contact with the first terminal plate 380.

The first protrusion 330_PR and the first terminal plate 380 may be welded together in order to be coupled to each other. For example, a first welding area may be defined on the top surface of the first terminal plate 380. In one or more embodiments, the first welding area may be defined on a top surface of the first recess 382. In one or more embodiments, the first welding area may be arranged around the first hole H1 of the first terminal plate 380. A welding process may be performed on the first welding area, and thus, the first terminal plate 380 and the first current collector 330 may be coupled to each other. In one or more embodiments, the first current collector 330 and the first terminal plate 380 may be electrically connected to each other. A welding bead, and/or the like, may be provided on (in) the first welding area due to the welding process.

During the process of welding the first protrusion 330_PR to the first terminal plate 380, a welding gas such as a nitrogen gas may be generated. In embodiments in which the welding gas generated during the welding process does not escape to the outside, welding quality may deteriorate due to the remaining welding gas. As illustrated in FIG. 5B, according to one or more embodiments of the present disclosure, the secondary battery may include the first tapered part 384 and the second tapered part 386 having the different inclination angles in the first recess 382, and thus, the welding gas generated in embodiments in which the welding process is performed may escape (*e.g*., easily escape) to the outside. For example, to remove the welding gas generated if (*e.g*., when) the welding process is performed, in embodiments in which wind (*e.g*., air or another gas) is sprayed from an upper end of a right side and wind is suctioned from an upper end of a left side in the first terminal plate 380 disclosed in FIG. 5B, the wind may be effectively circulated by the first tapered part 384 and the second tapered part 386, which have different inclination angles, to allow the welding gas to escape to the outside and not remain within the first recess 382. Therefore, defects of the secondary battery may be reduced, and the reliability of secondary battery may be improved.

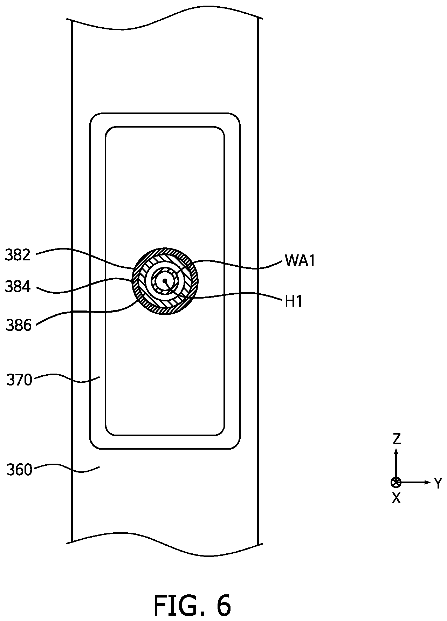

FIG. 6 illustrates a view for describing the first welding area defined on the first terminal plate according to one or more embodiments of the present disclosure. For reference, FIG. 6 may illustrate a plan view of the region R1 of FIG. 4 (*e.g*., a plan view of a portion of the first cap plate 360) when viewed in the first direction X.

Referring to FIGS. 4 and 6, the first terminal plate 380 may include a first welding area WA1 formed on the top surface of the first recess 382. A welding process may be performed on the first welding area WA1, and thus, the first terminal plate 380 and the first current collector 330 may be coupled to each other. In one or more embodiments, a welding area WA1 may be defined on the top surface of the first recess 382 through the welding process, and thus, the first recess 382 and the first protrusion 330_PR may be welded together in order to be coupled to each other. In one or more embodiments, the first current collector 330 and the first terminal plate 380 may be electrically connected to each other. A welding bead, and/or the like, may be provided on the first welding area WA1 due to the welding process. The first welding area WA1 is illustrated as having a donut shape, but the present disclosure is not limited thereto. The first welding area WA1 may have any shape by which the first terminal plate 380 and the first current collector 330 may be welded and coupled to each other.

In one or more embodiments, the first terminal plate 380 may include a first hole H1. The first hole H1 may be arranged within the first recess 382 of the first terminal plate 380 to expose a portion of the top surface of the first protrusion 330_PR. In embodiments in which a portion of the top surface of the first protrusion 330_PR is exposed by the first hole H1, it is possible to check whether the first terminal plate 380 and the first protrusion 330_PR are in contact with each other through the first hole H1. In one or more embodiments, as illustrated in FIG. 6, the first welding area WA1 may be arranged around the first hole H1.

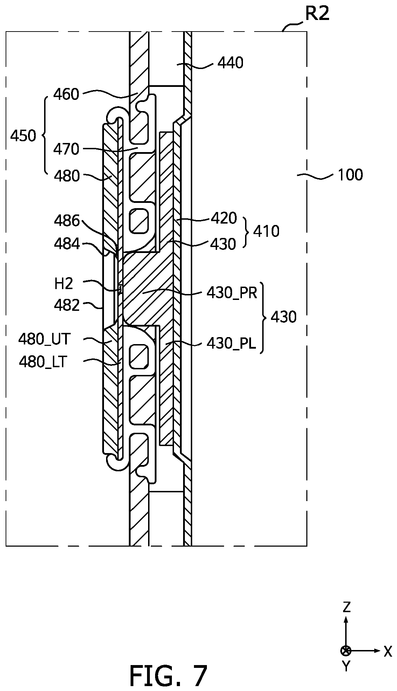

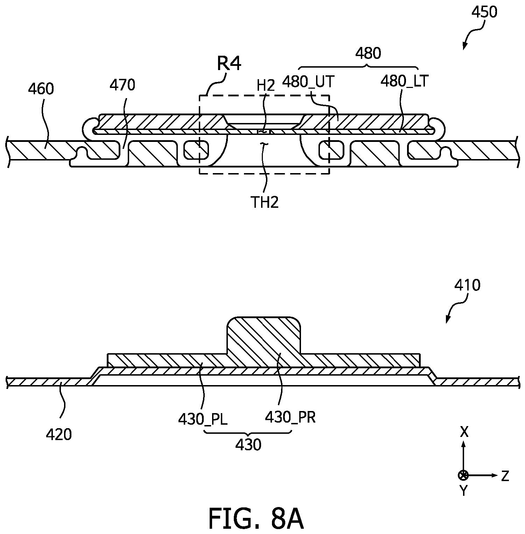

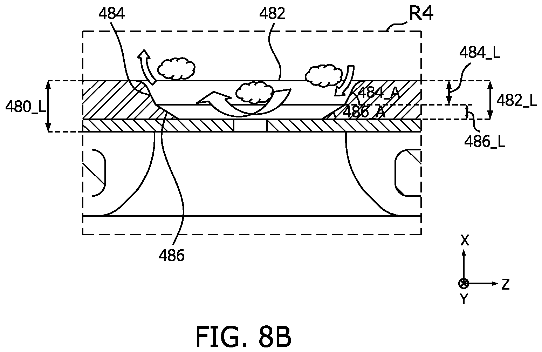

FIG. 7 illustrates an enlarged view for describing a region R2 of FIG. 2, according to one or more embodiments of the present disclosure. FIG. 8A illustrates a view of a structure in which a second cap assembly and a second sub-plate assembly of FIG. 7 are separated from each other. FIG. 8B illustrates an enlarged view of the region R4 of FIG. 8A, according to one or more embodiments of the present disclosure.

Referring to FIG. 7, a second sub-plate assembly 410 and a second cap assembly 450 may be coupled to one side of the electrode assembly 100.

The second sub-plate assembly 410 may be coupled to one side of the electrode assembly 100 and may be electrically connected to the second electrode plate (*e.g*., a negative electrode plate) of the electrode assembly 100. The second sub-plate assembly 410 may include a second sub-plate 420 and a second current collector 430.

The second sub-plate 420 may be coupled to the second electrode tab of the electrode assembly 100. For example, the second electrode tab may be welded to the second sub-plate 420. The second sub-plate 420 may be in contact with the second electrode tab and electrically connected to the second electrode plate.

The second current collector 430 may be coupled to the second sub-plate 420. For example, the second current collector 430 and the second sub-plate 420 may be welded together in order to be coupled to each other. The second current collector 430 may be electrically connected to the second sub-plate 420.

A second insulating member 440 may be arranged between the second sub-plate assembly 410 and the second cap assembly 450. The second insulating member 440 may prevent or reduce contact between the second sub-plate 420 and the second cap plate 460.

Referring to FIG.8A, the second current collector 430 may include a second flat surface 430_PL and a second protrusion 430_PR. The second flat surface 430_PL may be welded and coupled to the second sub-plate 420. The second protrusion 430_PR may protrude from the second flat surface 430_PL. The second protrusion 430_PR may be provided in a cylindrical shape.

The second cap assembly 450 may include a second cap plate 460, a second sealing member 470, and a second terminal plate 480.

The second cap plate 460 may include a second through-hole TH2. The second sealing member 470 may be coupled to the second cap plate 460. The second sealing member 470 may seal a gap between the second terminal plate 480 and the second cap plate 460. The second sealing member 470 may include an insulating material. The second cap plate 460 and the second terminal plate 480 may be insulated from each other by the second sealing member 470.

The second terminal plate 480 may be coupled to the second sealing member 470. The second terminal plate 480 may be a negative electrode terminal of the secondary battery. For example, a busbar may be welded to the second terminal plate 480 and thus be electrically connected to another secondary battery. For example, the busbar may be welded to a second upper terminal plate 480_UT.

The second terminal plate 480 may include the second upper terminal plate 480_UT and a second lower terminal plate 480_LT. The second lower terminal plate 480_LT may be in contact with the second sealing member 470. The second upper terminal plate 480_UT may be arranged on the second lower terminal plate 480_LT. For example, the second lower terminal plate 480_LT may be arranged between the second sealing member 470 and the second upper terminal plate 480_UT.

A second recess 482 may be defined in a top surface of the second terminal plate 480. In one or more embodiments, the second recess 482 may be defined in a top surface of the second upper terminal plate 480_UT. For example, the second recess 482 may be defined in a portion of the top surface of the second upper terminal plate 480_UT, which overlaps the second protrusion 430_PR in the first direction X. A thickness of a central portion of the second upper terminal plate 480_UT may be less than a thickness of the other portion of the second upper terminal plate 480_UT due to the second recess 482. The second upper terminal plate 480_UT may expose a portion of the second lower terminal plate 480_LT. For example, a portion of the second lower terminal plate 480_LT may be exposed through the second recess 482 of the second upper terminal plate 480_UT.

In one or more embodiments, the second upper terminal plate 480_UT and the second lower terminal plate 480_LT may be made of different materials. The second upper terminal plate 480_UT may include, for example, aluminum (Al). The second lower terminal plate 480_LT may include, for example, copper (Cu). In one or more embodiments, the second upper terminal plate 480_UT may be a conductive material that is made of aluminum as a main component. The second lower terminal plate 480_LT may be a conductive material that is made of copper as a main component. Herein, the term main component refers to a material that has a main content (*e.g*., has the highest amount or atomic percentage (at%)) among materials forming an alloy in the conductive material, as would be understood by persons of ordinary skill in the art .

It should be understood that the second upper terminal plate 480_UT is described as including aluminum, and the second lower terminal plate 480_LT is described as including copper, but this is for illustration purposes only. In one or more embodiments, the second upper terminal plate 480_UT and the second lower terminal plate 480_LT may include different conductive metals.

As shown, for example, in FIG. 8B, the second recess 482 may include a third tapered part 484 (e. g. the first tapered part) having a third inclination angle 484_A (e. g. the first inclination angle) with respect to the third direction Z and a fourth tapered part 486 (e. g. the second tapered part) having a fourth inclination angle 486_A (e. g. the second inclination angle) with respect to the third direction Z. The third tapered part 484 may be arranged above the fourth tapered part 486. In one or more embodiments, the third inclination angle 484_A and the fourth inclination angle 486_A may be different from each other. In one or more embodiments, the third inclination angle 484_A may be greater than the fourth inclination angle 486_A with respect to the third direction Z. The second recess 482 may have a shape in which a top surface of the second upper terminal plate 480_UT is concavely recessed by the third tapered part 484 and the fourth tapered part 486.

In one or more embodiments, a height 484_L of the third tapered part 484 may be equal to a height 486_L of the fourth tapered part 486.

In one or more embodiments, a maximum depth 482_L of the second recess 482 may be about 60% or more relative to a thickness 480_L of the second terminal plate 480 in (at) an area other than the second recess 482. In one or more embodiments, the maximum depth 482_L of the second recess 482 may be a depth of a portion of the second recess 482 at which the third tapered part 484 and the fourth tapered part 486 are not provided. In other words, the maximum depth 482_L of the second recess 482 may be substantially equal to the height 484_L of the third tapered part 484 plus the height 486_L of the fourth tapered part 486.

In one or more embodiments, the second lower terminal plate 480_LT may include a second hole H2. The second hole H2 may be defined in the second lower terminal plate 480_LT exposed by the second upper terminal plate 480_UT. The second hole H2 may expose a portion of the top surface of the second protrusion 430_PR. In embodiments in which a portion of the top surface of the second protrusion 430_PR is exposed by the second hole H2, it is possible to check whether the second terminal plate 480 and the second protrusion 430_PR are in contact with each other through the second hole H1. However, the present disclosure is not limited thereto. For example, the second terminal plate 480 may completely cover the top surface of the second protrusion 430_PR without defining the second hole H2.

Hereinafter, the coupling of the second sub-plate assembly 410 and the second cap assembly 450 will be described. In embodiments in which the second sub-plate assembly 410 and the second cap assembly 450 are coupled to each other, the top surface of the second protrusion 430_PR may be in contact with the second lower terminal plate 480_LT. In one or more embodiments, the second protrusion 430_PR may pass through the second through-hole TH2 of the second cap plate 460 and be in contact with the second lower terminal plate 480_LT. The second protrusion 430_PR and the second lower terminal plate 480_LT may be welded together in order to be coupled to each other. For example, a second welding area may be defined on the top surface of the second lower terminal plate 480_LT. In one or more embodiments, the second welding area may be arranged around the second hole H2 of the second lower terminal plate 480_LT. A welding process may be performed on the second welding area, and thus, the second terminal plate 480 and the second current collector 430 may be coupled to each other. In one or more embodiments, the second current collector 430 and the second terminal plate 480 may be electrically connected to each other. A welding bead, and/or the like, may be defined on (in) the second welding area due to the welding process.

During the process of welding the second protrusion 430_PR to the second terminal plate 480, a welding gas such as a nitrogen gas may be generated. In embodiments in which the welding gas generated during the welding process does not escape to the outside, welding quality may deteriorate due to the remaining welding gas. As illustrated in FIG. 5B, according to one or more embodiments of the present disclosure, the secondary battery may include the third tapered part 484 and the fourth tapered part 486 having the different inclination angles in the second recess 482, and thus, the welding gas generated in embodiments in which the welding process is performed may escape (*e.g*., easily escape) to the outside. For example, to remove the welding gas generated if (*e.g*., when) the welding process is performed, in embodiments in which wind (*e.g*., air or another gas) is sprayed from an upper end of a right side and wind is suctioned from an upper end of a left side in the second terminal plate 480 disclosed in FIG. 8B, the wind may be effectively circulated by the third tapered part 484 and the fourth tapered part 486, which have different inclination angles, to allow the welding gas to escape to the outside and not remain within the second recess 482. Therefore, defects of the secondary battery may be reduced, and the reliability of secondary battery may be improved.

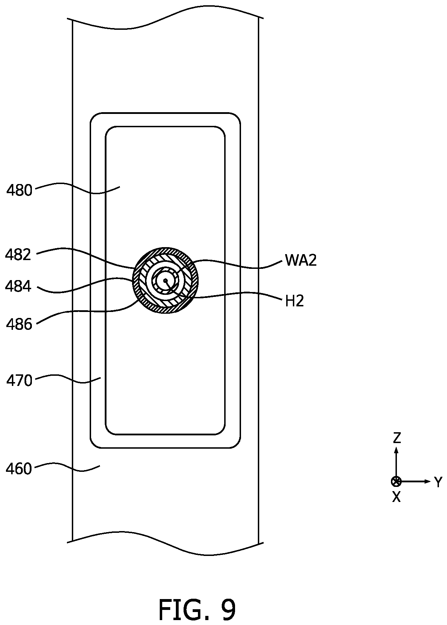

FIG. 9 illustrates a view for describing the second welding area defined on the second terminal plate according to one or more embodiments of the present disclosure. For reference, FIG. 9 may illustrate a plan view of the region R2 of FIG. 7 (*e.g*., a plan view of a portion of the second cap plate 460) when viewed in the first direction X.

Referring to FIGS. 7 and 9, the second terminal plate 480 may include a second welding area WA2 defined on a top surface of the second lower terminal plate 480_LT. A welding process may be performed on the second welding area WA2, and thus, the second terminal plate 480 and the second current collector 430 may be coupled to each other. In one or more embodiments, the top surface of the second lower terminal plate 480_LT and the second protrusion 430_PR may be welded together in order to be coupled to each other by the welding process. In one or more embodiments, the second current collector 430 and the second terminal plate 480 may be electrically connected to each other. A welding bead, and/or the like, may be provided on the second welding area WA2 due to the welding process. The second welding area WA2 is illustrated as having a donut shape, but the present disclosure is not limited thereto. The second welding area WA2 may have any shape in which the second lower terminal plate 480_LT and the second current collector 430 may be welded and coupled to each other.

In one or more embodiments, the second lower terminal plate 480_LT may include a second hole H2. The second hole H2 may be arranged on the top surface of the second lower terminal plate 480_LT to expose a portion of the top surface of the second protrusion 430_PR. In embodiments in which a portion of the top surface of the second protrusion 430_PR is exposed by the second hole H2, it is possible to check whether the second lower terminal plate 480_LT and the second protrusion 430_PR are in contact with each other through the second hole H1. In one or more embodiments, as illustrated in FIG. 6, the second welding area WA2 may be arranged around the second hole H2.

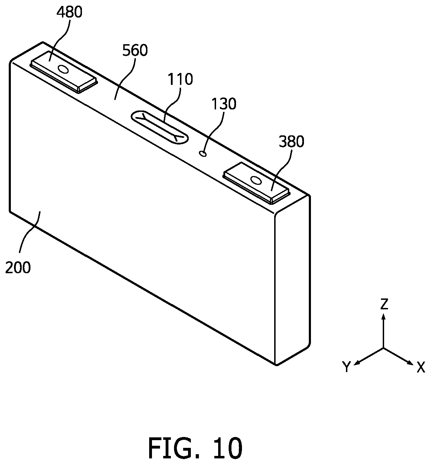

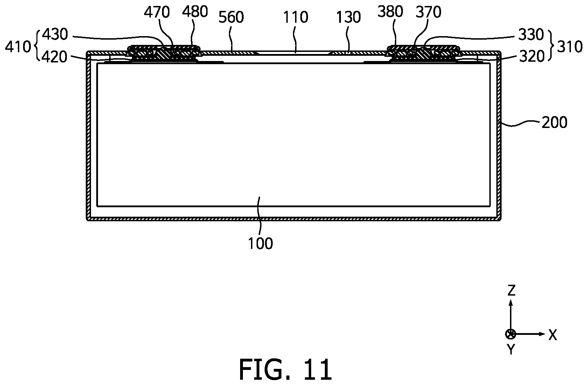

FIG. 10 illustrates a perspective view of a secondary battery according to one or more embodiments of the present disclosure. FIG. 11 illustrates a cross-sectional view of the secondary battery of FIG. 10, according to one or more embodiments of the present disclosure.

Referring to FIGS. 10 and 11, the secondary battery may include an electrode assembly 100, a case 200 accommodating the electrode assembly, a third cap plate 560, a first sub-plate assembly 310, a second sub-plate assembly 410, a first terminal plate 380, and a second terminal plate 480.

The electrode assembly 100 may be accommodated inside the case 200. The electrode assembly 100 may include a first electrode plate, a separator, and a second electrode plate. The first electrode plate may include a first electrode tab. The second electrode plate may include a second electrode tab. In one or more embodiments, each of the first electrode tab and the second electrode tab may be arranged at an upper side of the electrode assembly. In one or more embodiments, the upper side may be for convenience of explanation based on the secondary battery illustrated in FIGS. 10 and 11, and its position may be changed in when the secondary battery rotates in left and right or upward and downward directions.

An electrolyte injection hole 130 may be defined in the third cap plate 560. An electrolyte may be injected into the case 200 through the electrolyte injection hole 130. After the injection of the electrolyte is completed, the electrolyte injection hole 130 may be sealed using a seal, refers to such as a plug.

In one or more embodiments, a vent part 110 may be defined in the third cap plate 560. However, the present disclosure is not limited thereto. For example, the vent part 110 may be defined in a bottom surface of the case 200. In one or more embodiments, a bottom surface of the case 200 may be a surface facing (*e.g*., opposite to) the third cap plate 560 in the third direction Z. The vent part 110 may prevent or reduce explosion of the secondary battery or prevent or reduce a chain heating reaction of secondary batteries arranged close to the secondary battery.

The case 200 may include a third surface that is opened in the third direction Z. A third cap plate 560 may be coupled to the opened third surface to seal the secondary battery.

A first sub-plate assembly 310 may be coupled to the first electrode tab of the electrode assembly 100. The first sub-plate assembly 310 may include a first sub-plate 320 and a first current collector 330. The first sub-plate 320 may be welded to the first electrode tab, and the first current collector 330 may be welded to the first sub-plate 320. The first current collector 330 may include a first flat surface and a first protrusion. Descriptions of the first sub-plate 320 and the first current collector 330 may be the same as those described in FIGS. 4 and 5a.

A second sub-plate assembly 410 may be coupled to the second electrode tab of the electrode assembly 100. The second sub-plate assembly 410 may include a second sub-plate 420 and a second current collector 430. The second sub-plate 420 may be welded to the second electrode tab, and the second current collector 430 may be welded to the second sub-plate 420. The second current collector 430 may include a second flat surface and a second protrusion. Descriptions of the second sub-plate 420 and the second current collector 430 may be the same as those described in FIGS. 7 and 8A.

The third cap plate 560 may be coupled to the first sub-plate assembly 310 and the second sub-plate assembly 410. The first sealing member 370 may be coupled to the third cap plate 560, and the first terminal plate 380 may be coupled to the first sealing member 370. The first terminal plate 380 may include a first hole. The first terminal plate 380 may be electrically connected to the first current collector 330. Descriptions of the first sealing member 370 and the first terminal plate 380 may be the same as those described in FIGS. 4, 5A, and 5B.

The second sealing member 470 may be coupled to the third cap plate 560, and the second terminal plate 480 may be coupled to the second sealing member 470. The second terminal plate 480 may include a second hole. The second terminal plate 480 may be electrically connected to the second current collector 430. Descriptions of the second sealing member 470 and the second terminal plate 480 may be the same as those described in FIGS. 7, 8A, and 8B.

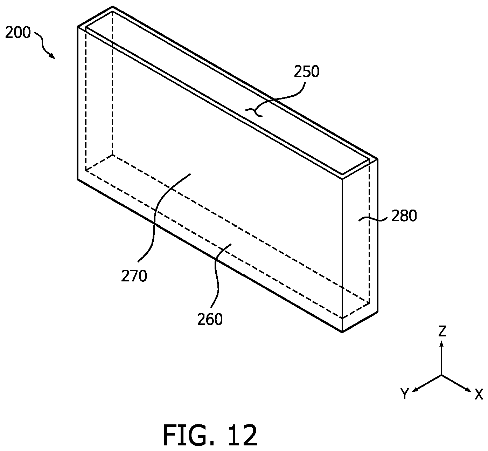

FIG. 12 illustrates a perspective view of the case according to one or more embodiments of the present disclosure.

Referring to FIGS. 11 and 12, the case 200 may include an opening 250 with an opened upper portion, a bottom part 260 facing (*e.g*., opposite to) the opening 250, long sidewalls 270 perpendicularly connected to the bottom part 260, facing each other, and spaced and/or apart (*e.g*., spaced apart or separated) from each other, and short sidewalls 280 perpendicularly connected to the bottom part 260, facing each other, and spaced and/or apart (*e.g*., spaced apart or separated) from each other and having an area less than that of the long sidewall 270.

The long sidewalls 270 may include a third long sidewall and a fourth long sidewall. The third and fourth long sidewalls may face each other. The third long sidewall and the fourth sidewall may be spaced and/or apart (*e.g*., spaced apart or separated) from each other to face each other in the second direction Y.

The short sidewalls 280 may include a third short sidewall and a fourth short sidewall. The third short sidewall and the fourth shout sidewall may face each other. The third short sidewall and the fourth short sidewall may be spaced and/or apart (*e.g*., spaced apart or separated) from each other and face each other in the first direction X. An area of each of the third short sidewall and the fourth short sidewall may be less than an area of each of the third long sidewall and the fourth long sidewall.

The opening 250 may face the bottom part 260. The opening 250 and the bottom part 260 may be spaced and/or apart (*e.g*., spaced apart or separated) from each other to face each other in the third direction Z.

The case 200 may be made of a conductive metal such as aluminum, an aluminum alloy, nickel-plated steel, and/or the like.

The third cap plate 560 may cover the opening 250 and may be coupled to the case 200. For example, the third cap plate 560 may be welded to the case 200. The third cap plate 560 may seal the case 200.

The above embodiments of the present disclosure have been disclosed for the purpose of illustration, and those of ordinary skill in the art will be able to make one or more suitable modifications, changes, and additions within the scope of the present disclosure, and such modifications, changes, and additions should be considered to fall within the scope of the patent claims.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

The portable device, vehicle, secondary battery, *e.g*., a battery controller, and/or cap assembly and/or any other relevant devices or components according to embodiments of the present disclosure described herein may be implemented utilizing any suitable hardware, firmware (*e.g*., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents. Although the present disclosure has been described above with respect to one or more embodiments thereof, the present disclosure is not limited thereto. Various modifications and variations can be made thereto by those skilled in the art within the present disclosure and the equivalent scope of the appended claims.

### REFERENCE NUMERALS

100: electrode assembly
110: vent part
130: electrolyte injection hole
200: case
310: first sub-plate assembly
320: first sub-plate
330: first current collector
330_PR: first protrusion
330_PL: first flat surface
340: first insulating member
350: first cap assembly
360: first cap plate
370: first sealing member
380: first terminal plate
382: first recess
384: first tapered part
386: second tapered part
410: second sub-plate assembly
420: second sub-plate
430: second current collector
430_PR: second protrusion
430_PL: second flat surface
440: second insulating member
450: second cap assembly
460: second cap plate
470: second sealing member
480: second terminal plate
482: second recess
484: third tapered part
486: second tapered part
560: third cap plate

## Claims

1. A secondary battery comprising:
an electrode assembly (100);
a sub-plate assembly (310, 410) comprising
a sub-plate (320, 420) connected to the electrode assembly (100), and
a current collector (330, 430) coupled to the sub-plate (320, 420); and
a terminal plate (380, 480) coupled to the current collector (330, 430), the terminal plate (380, 480) defining a recess (382, 482) in a top surface of the terminal plate (380, 480), wherein the recess (382, 482) is defined by:
a first tapered part (384, 484) having a first inclination angle (384_A, 484_A) with respect to a direction parallel to the terminal plate (380, 480); and
a second tapered part (386, 486) having a second inclination angle (386_A, 486_A) with respect to the direction parallel to the terminal plate (380, 480), and
wherein the first inclination angle (384_A, 484_A) and the second inclination angle (386_A, 486_A) are different from each other.

2. The secondary battery as claimed in claim 1, wherein the first tapered part (384, 484) is above the second tapered part (386, 486).

3. The secondary battery as claimed in claim 1 or 2, wherein the first inclination angle (384_A, 484_A) is greater than the second inclination angle (386_A, 486_A).

4. The secondary battery as claimed in any one of claims 1 to 3, wherein, with respect to a direction perpendicular to the terminal plate (380, 480), a height (384_L, 484_L) of the first tapered part (384, 484) is equal to a height (386_L, 486_L) of the second tapered part (386, 486).

5. The secondary battery as claimed in any one of claims 1 to **4,** wherein the current collector (330, 430) comprises:
a flat surface (330_PL, 430_PL) coupled to the sub-plate (320, 420); and
a protrusion (330_PR, 430_PR) protruding from the flat surface (330_PL, 430_PL),
wherein the protrusion (330_PR, 430_PR) and the terminal plate (380, 480) are in contact with each other.

6. The secondary battery as claimed in claim 5, wherein the terminal plate (380, 480) and the protrusion (330_PR, 430_PR) are welded to each other, and a top surface of the terminal plate (380, 480) at the recess (382, 482) comprises a welding area (WA1, WA2) welded to the protrusion (330_PR, 430_PR).

7. The secondary battery as claimed in claim 5 or 6, wherein the terminal plate (380, 480) defines a hole (H1, H2), and the hole (H1, H2) exposes a portion of a top surface of the protrusion (330_PR, 430_PR).

8. The secondary battery as claimed in claim 7, wherein the welding area (WA1, WA2) is around the hole (H1, H2).

9. The secondary battery as claimed in any one of claims 1 to 8, wherein a maximum depth (382_L, 482_L) of the recess (382, 482) is about 60% or more of a thickness (380_L, 480_L) of the terminal plate (380, 480) at an area other than the recess (382, 482).

10. The secondary battery as claimed in any one of claims 1 to 9, wherein the terminal plate (480) comprises an upper terminal plate (480_UT) and a lower terminal plate (480_LT), and the upper terminal plate (480_UT) and the lower terminal plate (480_LT) are made of different materials.

11. The secondary battery as claimed in any one of claims 1 to 10, further comprising:
a case (200) in which the electrode assembly (100) is accommodated, the case (200) defining a first opening (210) and a second opening (220) opposite the first opening (210);
a first cap plate (360) covering the first opening (210); and
a second cap plate (460) covering the second opening (220),
wherein the first cap plate (360) defines a through-hole (TH1),
the current collector (330, 430) comprises a flat surface (330_PL, 430_PL) coupled to the sub-plate (320, 420) and a protrusion (330_PR, 430_PR) protruding from the flat surface (330_PL, 430_PL), and
the protrusion (330_PR) is inserted into the through-hole (TH1).

12. The secondary battery as claimed in claim 11, wherein the case (200) comprises:
a first long sidewall (230) and a second long sidewall (230), which are spaced from each other and face each other; and
a first short sidewall (240) and a second short sidewall (240), which are spaced from each other and face each other, and each of the first short sidewall (240) and second short sidewall (240) has an area less than that of each of the first long sidewall (230) and the second long sidewall (230).

13. The secondary battery as claimed in claim 12, further comprising a vent part (110) in the first short sidewall (240) or the second short sidewall (240).

14. The secondary battery as claimed in any one of claims 11 to 13, further comprising a sealing member (370) coupled to the first cap plate (360), wherein the terminal plate (380) is coupled to the sealing member (370).

15. The secondary battery as claimed in any one of claims 1 to 14, further comprising:
a rectangular case (200) in which the electrode assembly (100) is accommodated, the case (200) defining an opening (250) at an upper portion of the rectangular case (200);
a third cap plate (560) covering the opening (250); and
a sealing member (370, 470) coupled to the third cap plate (560),
wherein the case (200) comprises:
a bottom part (260) facing the opening (250);
a third long sidewall (270) and a fourth long sidewall (270), which are perpendicularly connected to the bottom part (260), spaced from each other, and facing each other; and
a third short sidewall (280) and a fourth short sidewall (280), which are perpendicularly connected to the bottom part (260), spaced from each other, and facing each other, and each of the third short sidewall (280) and the fourth short sidewall (280) has an area less than that of each of the third long sidewall (270) and the fourth long sidewall (270),
wherein the third cap plate (560) comprises a vent part (110).
